# FASCICULE DE BREVET EUROPEEN

(11) **EP 4 258 880 B1**
(45) Date de publication et mention de la délivrance du brevet: **07.10.2026**
(21) Numéro de dépôt: 21823910.1
(22) Date de dépôt: 08.12.2021
(51) Int. Cl.: A01N 63/10, C05F 1/00, C09K 17/32

(54) **UTILISATION D'UN HYDROLYSAT DE KÉRATINE À HAUTES TENEURS EN ACIDES AMINÉS LIBRES POUR AUGMENTER LA RESPIRATION MICROBIENNE DES SOLS**
VERWENDUNG EINES KERATINHYDROLYSATS MIT HOHEM GEHALT AN FREIEN AMINOSÄUREN ZUR ERHÖHUNG DER MIKROBIELLEN BEATMUNG VON BÖDEN
USE OF A KERATIN HYDROLYSATE WITH HIGH FREE AMINO ACID CONTENTS FOR INCREASING MICROBIAL RESPIRATION OF SOILS

(30) Priorité: 09.12.2020 FR 2012932
(43) Date de publication de la demande: 18.10.2023
(73) Titulaire: Bretagne Chimie Fine, 56140 Pleucadeuc (FR)
(72) Inventeur: MOUNIER, Emmanuelle, 69007 Lyon (FR)
(74) Mandataire: Eveillard, Sophie
(86) Numéro de dépôt international: PCT/EP2021/084814
(87) Numéro de publication internationale: WO 2022/122831

(56) Documents cités:
- WO-A1-2009/082351
- WO-A1-2019/043128
- ANONYMOUS: "Biostimulant BCF Life Sciences : LEAFAMINE & FERTILAMINE", 29 September 2020 (2020-09-29), XP055798637, Retrieved from the Internet <URL:https://web.archive.org/web/20200929204927/https://www.bcf-lifesciences.com/fr/applications/biostimulant/> [retrieved on 20210423]
- JAIN RICHA ET AL: "Feather hydrolysate fromStreptomyces sampsoniiGS 1322: A potential low cost soil amendment", JOURNAL OF BIOSCIENCE AND BIOENGINEERING, ELSEVIER, AMSTERDAM, NL, vol. 121, no. 6, 20 February 2016 (2016-02-20), pages 672 - 677, XP029535399, ISSN: 1389-1723, DOI: 10.1016/J.JBIOSC.2015.11.003
- MANUEL TEJADA ET AL: "Use of biostimulants on soil restoration: Effects on soil biochemical properties and microbial community", APPLIED SOIL ECOLOGY, ELSEVIER, AMSTERDAM, NL, vol. 49, 16 July 2011 (2011-07-16), pages 11 - 17, XP028277883, ISSN: 0929-1393, [retrieved on 20110722], DOI: 10.1016/J.APSOIL.2011.07.009
- PAUL TANMAY ET AL: "Exploitation of chicken feather waste as a plant growth promoting agent using keratinase producing novel isolate Paenibacillus woosongensis TKB2", BIOCATALYSIS AND AGRICULTURAL BIOTECHNOLOGY, vol. 2, no. 1, 1 January 2013 (2013-01-01), pages 50 - 57, XP055799581, ISSN: 1878-8181, DOI: 10.1016/j.bcab.2012.10.001

## Description

L'invention concerne le domaine de l'agriculture et plus particulièrement l'utilisation d'un hydrolysat de kératine en application dans ou sur les supports de cultures tels que les sols pour augmenter la respiration microbienne des supports de culture.

Le sol est la couche superficielle, meuble de la croûte terrestre, il résulte de la transformation de la roche-mère enrichie par des apports organiques. Le sol est un écosystème à part entière. Il ne remplit pas seulement des rôles physique (substrat) et chimique (nutrition), il est un formidable habitat pour de nombreux organismes. Parmi eux, les microorganismes (champignons et bactéries principalement) représentent une majorité de cette vie du sol. L'activité et la diversité de ces microorganismes ont des effets spectaculaires sur la qualité des sols et le cycle des éléments nutritifs comme l'azote et le phosphore. Les sols agricoles ne font pas exception à la règle. Ainsi, le sol est à la fois le support et le produit de microorganismes.

La qualité du sol joue un rôle prépondérant en agriculture et dépend de différents paramètres tels que l'équilibre des propriétés physico-chimiques, la gestion du stress salin, le maintien de l'eau et des nutriments, ainsi que le développement de la microflore. Le sol est aujourd'hui considéré comme une ressource vitale, non renouvelable, qu'il convient donc de préserver.

Il existe classiquement deux types de produits naturels pour amender les sols, qui, lorsqu'ils sont cultivés, s'appauvrissent au cours du temps en matières organiques : les amendements organiques et les amendements minéraux. Les amendements organiques, d'origine végétale comme le compost, les fumiers d'animaux d'élevage et les résidus de cultures laissés en place, visent à reconstituer le stock de matière organique du sol et plus particulièrement de l'humus. Leur minéralisation est généralement progressive.

Les amendements minéraux sont principalement destinés à favoriser la croissance des plantes cultivées ; on parle alors de NPK pour azote, phosphore et potassium. Ils sont aussi utilisés pour améliorer l'équilibre des propriétés physico-chimiques et la correction du pH. Ce sont par exemple la chaux, la cendre de bois, le soufre, le sulfate de fer, l'argile.

La demande de brevet EP2210678A1 décrit un procédé de traitement de produits carnés comprenant une étape de dégraissage suivie d'une étape d'hydrolyse enzymatique. L'hydrolysat obtenu est utilisé en tant que biostimulant des sols et des plantes. Cet hydrolysat n'est pas décrit comme présentant une teneur élevée en acides aminés libres. En outre, le § (0011) de ce document précise que les produits comprenant des hydrolysats obtenus par hydrolyse avec des acides forts ne sont pas compatibles avec des applications en tant qu'amendement pour les plantes ou les sols.

De la même manière, les publications "Feather hydrolysate from Streptomyces sampsonii GS1322 : A potential low cost amendment » R. Jain et al. JOURNAL OF BIOSCIENCE AND BIOENGINEERING, vol 121 n°6, pages 672-677 ; « Use of biostimulants on soil restoration : Effects on soil biochemical properties and microbial community » M. Tejada et al. APPLIED SOIL ECOLOGY, vol 49, pages 11-17 et « Exploitation of chicken feather waste as a plant growth promoting agent using keratinase producing novel isolate Paenibacillus woosongensis TKB2 » P.Tanway et al. BIOCATALYSIS AND AGRICULTURAL BIOTECHNOLOGY vol.2 n°1, pages 50-57, décrivent l'obtention d'hydrolysats enzymatiques, ces hydrolysats ne présentent pas des teneurs en acides aminés libres comparables à celles de l'hydrolysat selon l'invention.

Par ailleurs WO2019/043128 A1 décrit un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprend de la L-cystine en une teneur allant de 4 à 6% en poids, de la cystéine en une teneur inférieure ou égale à 0,1% en poids et de la tyrosine en une teneur inférieure ou égale à 0,6% ainsi qu'un procédé de préparation de cet hydrolysat et l'extrait Internet « Biostimulant BCF Life Sciences LEAFAMINE & FERTILAMINE ; URL :https://web.archive.org/web/20200929204927/https://www.bcf-lifesciences.com/fr/applications/biostimulant/ » décrit que Leafamine^{®} est un mix de 17 acides aminés composé à plus de 80% d' acides aminés libres, que Leafamine ^{®} est généralement considéré comme un biostimulant et qu'il peut être appliqué par voie foliaire sur les grandes cultures ou en horticulture, ainsi que pour tous types de cultures maraîchères ou encore en culture hydroponique cependant ce document ne décrit pas que Leafamine ^{®} peut être appliquée dans ou sur un support de culture.

Il demeure toujours un besoin de nouveaux produits, destinés à être appliqués dans ou sur les supports de culture, pour améliorer la fertilité des sols, en particulier des produits qui ne conduisent pas à des déséquilibres de la vie du sol et qui soient respectueux de l'environnement et issus de l'économie circulaire.

La respiration microbienne des sols, encore appelée « mesure du dégagement du CO₂ du sol » est le résultat de la minéralisation de substances organiques par des microorganismes présents dans le sol. La respiration microbienne est un bon indicateur pour déterminer la présence de microorganismes et la fertilité d'un sol.

La présente invention vise à proposer des produits destinés à être appliqués dans ou sur les supports de culture, pour améliorer la fertilité des sols, et plus particulièrement à augmenter la respiration microbienne des sols.

L'invention porte ainsi sur l'utilisation d'un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprenant de l'acide glutamique en une teneur allant de 8 à 13% en poids par rapport au poids total de l'hydrolysat et de la glycine en une teneur allant de 6 à 9% en poids par rapport au poids total de l'hydrolysat, dans ou sur un support de culture pour augmenter la respiration microbienne dudit support de culture.

En particulier le support de culture est le sol nu ou le sol avec un couvert végétal.

L'utilisation de l'hydrolysat selon l'invention est effectuée en mélange avec le support de culture en une quantité allant de 100 g à 1000 g, de préférence de 200 g à 700 g et de manière préférée de 550 g à 650 g en matière active d'hydrolysat par m³ de support de culture ou en application sur le support de culture en une quantité allant de 500 g à 5000 g, de préférence 1500 g en matière active d'hydrolysat par 10000 m² de support de culture.

Selon un mode préféré, l'hydrolysat de kératine est utilisé sous la forme d'une composition aqueuse comprenant de 45% à 55 % en poids de matière active d'hydrolysat de kératine par rapport au poids total de ladite composition.

L'hydrolysat selon la présente invention, riche en acides aminés libres, permet d'augmenter la respiration microbienne des sols dès les premiers jours d'application. Il a été observé que cet effet est maintenu pendant plusieurs mois. Il a également été montré que cet hydrolysat particulier permet l'augmentation de la quantité des microorganismes déjà présents ou ajoutés dans les sols, notamment l'augmentation du développement des bactéries et des champignons.

La présente invention vise également l'utilisation de l'hydrolysat pour la régénération des supports de culture, de manière préférée des sols, en particulier pour stimuler l'activité enzymatique des sols.

Cette activité enzymatique des sols est en lien avec la vie des microorganismes qu'ils contiennent.

Plus particulièrement, l'invention vise l'utilisation de l'hydrolysat selon la présente invention pour stimuler le développement des microorganismes capables d'utiliser au moins un substrat choisi dans le groupe formé par les substrats carbonés, les substrats azotés et les substrats phosphorés.

L'utilisation de l'hydrolysat selon l'invention permet plus particulièrement le développement des microorganismes suivants : *Actinomycetes spp, Azobacter spp , Azospirillum spp, Bacillus spp (amyloliquefaciens, megaterium, radicola, subtilis...) , Coniothyrium spp (minitans), Lactobacillus spp (rhamnosus, faciminis...) , Mycorrhizae spp (glomus..), Phanerochaete spp, Pseudomonas spp, Rhizobium spp, Trichoderma spp (atroviride, harzianium), Saccharomycès spp, Klebsiella spp, Burkholderia spp, Bradyrhizobium spp.*

Cet hydrolysat permet d'augmenter la respiration microbienne des sols en particulier celle des sols fatigués ; il permet de pouvoir diminuer voire éviter les apports en fertilisants.

L'hydrolysat selon la présente invention s'inscrit dans la recherche d'une agriculture plus durable et résiliente : il peut être utilisé dans des quantités très inférieures aux quantités utilisées pour les engrais. En effet, sans vouloir être lié à une quelconque théorie, l'hydrolysat selon l'invention n'a pas vocation à apporter d'éléments nutritifs pour les plantes mais plutôt à booster, stimuler le développement des microorganismes afin d'avoir un effet régénérateur de la population tellurique.

D'autres aspects, avantages, propriétés de l'invention ressortiront clairement de la description, en particulier des exemples qui suivent, à titre indicatif et nullement limitatif.

### Description détaillée

### Définitions

Par « support de culture », on entend tout support sur lequel une plante peut se développer c'est-à-dire dans lequel un végétal se fixe et puise les minéraux dont il a besoin. Sont particulièrement visés les sols agricoles quel que soit leur statut en particulier les sols fertilisés et les sols fatigués, ces sols étant nus ou avec un couvert végétal ainsi que les substrats reconstitués fertilisés ou non.

Par « sol agricole », au sens du présent texte on entend la couche superficielle de la terre avec une épaisseur allant de 0 à de 0.30 m

Par « support de culture fertilisé » on entend un support sur lequel a été ajouté un apport exogène de N, P et/ou K.

La respiration du sol est une mesure de l'activité métabolique de la communauté microbienne du sol. Elle représente l'abondance des microorganismes vivants dans le sol qui décomposent les résidus et amendements, produisent des éléments nutritifs utilisables par les plantes et participent à développer la structure du sol. La respiration du sol correspond à la quantité de CO₂ dégagée par gramme de matière sèche, c'est-à-dire au taux de consommation d'O₂ par les microorganismes présents dans le sol.

La respiration du sol est mesurée selon la norme ISO 16072/2016.

### Hydrolysat

L'hydrolysat utilisé selon la présente invention se distingue par son taux élevé d'acides aminés sous forme libre : au moins 88% en poids d'acides aminés libres par rapport au poids total des acides aminés de l'hydrolysat, le reste étant également sous forme très hydrolysée puisque le reste des acides aminés de l'hydrolysat est sous la forme de petits peptides présentant une masse moléculaire inférieure ou égale à 800 Dalton. Cela est établi avec une méthode d'analyse par HPLC sur colonne chromatographique en perméation de gel qui permet de déterminer la répartition des poids moléculaires de produits contenant des protéines et/ou des peptides et/ou des acides aminés libres. L'échantillon est mis en solution : la répartition des poids moléculaires est faite sur la partie soluble des produits à analyser. Puis l'échantillon est injecté en HPLC, suivie d'une détection UV. La séparation des différents composés se fait en fonction de leur taille moléculaire.

Avantageusement, l'hydrolysat utilisé selon la présente invention est obtenu à partir de matières kératiniques naturelles, animales, notamment de volaille, avantageusement à partir de plumes de volailles. A titre de volailles, on peut citer les poules, notamment les poules pondeuses, les poulets, les dindes, les canards, les oies... Les matières kératiniques naturelles peuvent également être choisies parmi les poils d'animaux, notamment les soies de porcs, les sabots d'animaux, les ongles d'animaux.

En particulier, avantageusement l'hydrolysat selon la présente invention n'est pas obtenu à partir de kératine humaine telle que les cheveux.

Selon une première variante préférée de l'invention, l'hydrolysat présente la composition suivante en acides aminés totaux : une teneur en acide aspartique allant de 5 à 8 % en poids, de préférence allant de 6 à 7 % en poids ; une teneur en thréonine allant de 3 à 6 % en poids, de préférence de 4 à 5 % en poids ; une teneur en sérine allant de 9 à 14 % en poids, de préférence allant de 10 à 12 % en poids; une teneur en acide glutamique allant de 9 à 11 % en poids ; une teneur en glycine allant de 6,5 à 8 % en poids; une teneur en alanine allant de 4 à 6 % en poids, de préférence de 4 à 5 % en poids ; une teneur en valine allant de 6 à 10 % en poids, de préférence allant de 6,5 à 8 % en poids ; une teneur en méthionine allant de 0,1 à 0,6 % en poids ; une teneur en isoleucine allant de 4 à 6 % en poids, de préférence allant de 4 à 5 % en poids ; une teneur en leucine allant de 6 à 9 % en poids, de préférence allant de 7 à 8 % en poids ; une teneur en phénylalanine allant de 2 à 5 % en poids ; une teneur en lysine allant de 1 à 3 % en poids, une teneur en histidine allant de 0,4 à 1 % en poids ; une teneur en arginine allant de 5,5 à 6,5 % en poids ; une teneur en proline allant de 8,5 à 11 % en poids , une teneur en tryptophane inférieure à 0,1 %, de préférence 0 % en poids par rapport au poids total de l'hydrolysat.

Selon une deuxième variante préférée de l'invention l'hydrolysat présente une teneur en cystine allant de 1 à 2,5 % en poids, de préférence allant de 1 à 2 % en poids et une teneur en tyrosine allant de 0,1 à 1% en poids par rapport au poids total de l'hydrolysat.

Les acides aminés sont dosés selon une méthode adaptée du règlement CE 152/2009.

Selon cette méthode, pour la détermination des quantités d'acides aminés totaux, une hydrolyse au moyen d'un acide est préalablement effectuée.

Pour la détermination des quantités d'acides aminés libres et totaux, les acides aminés sont séparés par chromatographie (« CLHP » ou « HPLC » en langue anglaise) de préférence avec colonne échangeuse d'ions et dosés par réaction avec la ninhydrine et détection photométrique généralement à 570 nm.

Selon une troisième variante préférée, l'hydrolysat comprend les acides aminés libres suivants : au moins 95% d'acide aspartique sous forme libre en poids par rapport au poids total d'acide aspartique dans l'hydrolysat ; au moins 95% de thréonine sous forme libre en poids par rapport au poids total de thréonine dans l'hydrolysat ; au moins 95% de sérine sous forme libre en poids par rapport au poids total de sérine dans l'hydrolysat ; au moins 93 % d'acide glutamique sous forme libre en poids par rapport au poids total d'acide glutamique dans l'hydrolysat ; au moins 93% de glycine sous forme libre en poids par rapport au poids total de glycine dans l'hydrolysat ; au moins 93% d'alanine sous forme libre en poids par rapport au poids total d'alanine dans l'hydrolysat ; au moins 95% de méthionine sous forme libre en poids par rapport au poids total de méthionine dans l'hydrolysat ; au moins 93% de phénylalanine sous forme libre en poids par rapport au poids total de phénylalanine dans l'hydrolysat ; au moins 95%, de proline sous forme libre en poids par rapport au poids total de proline dans l'hydrolysat.

Comme présenté au tableau 2, la majorité des acides aminés sont au moins à 95% sous forme libre par rapport au poids total dudit acide aminé dans l'hydrolysat.

Les acides aminés libres sont sous leur configuration naturelle L (Lévogyre) non dénaturée, ainsi rapidement disponibles pour les microorganismes du sol. En outre, l'hydrolysat utilisé selon l'invention présente des taux élevés en acides aminés ramifiés libres : valine, leucine et isoleucine. Or, ces acides aminés ramifiés sont connus pour être plus difficiles à libérer dans des conditions de mise en œuvre identiques.

Avantageusement, la teneur en acides aminés totaux (libres et liés) de l'hydrolysat utilisé selon l'invention, c'est-à-dire la matière active de l'hydrolysat, va de 40% à 95%, de préférence 45% à 94% en poids par rapport au poids total de l'hydrolysat, l'hydrolysat comprenant en outre de la matière minérale et de l'eau. Comme déjà mentionné les acides aminés de l'hydrolysat selon l'invention sont essentiellement des acides aminés libres.

De préférence, le taux de matière minérale dudit hydrolysat, de préférence chlorure, phosphate ou sulfate de sodium ou de potassium, est inférieur ou égal à 9 % en poids, de préférence inférieure à 8% en poids par rapport au poids total de l'hydrolysat. Ce taux de matière minérale est déterminé après calcination de l'hydrolysat à 550°C pendant 4 heures.

L'hydrolysat utilisé selon l'invention est également soluble dans l'eau, en effet 1 g d'hydrolysat est soluble dans 5 ml d'eau. En effet l'hydrolysat contient une très grande majorité d'acides aminés hydrosolubles en nombre comme en poids. De plus, le faible taux de cystine et de tyrosine dans l'hydrolysat utilisé de manière préférée contribue aussi à le rendre très hydrosoluble. Cette solubilité lui confère des propriétés très intéressantes pour la mise en œuvre du produit final appliqué sur le sol. Cette solubilité instantanée est un atout pour l'agriculteur car elle permet d'éviter tous les problèmes pratiques rencontrés lors de la pulvérisation, notamment le bouchage des buses du pulvérisateur... Cet avantage a notamment été observé lorsque l'hydrolysat est utilisé à des doses de 0,1 à 5 kg par hectare.

Les acides aminés de l'hydrolysat peuvent être mélangés à d'autres produits de type phytopharmaceutiques et/ou engrais appliqués en solution sur le sol et les plantes ; de fait, ils permettent pour l'utilisateur final d'éviter d'ajouter des passages supplémentaires d'engins agricoles sur les champs.

### Procédé de préparation de l'hydrolysat

L'hydrolysat utilisé selon l'invention est un hydrolysat chimique, en effet il est obtenu en mettant en œuvre au moins une étape d'hydrolyse chimique, acide. Ainsi l'hydrolysat de kératine utilisé selon l'invention est préparé à partir d'une matière kératinique animale, de préférence de volaille, selon un procédé de préparation comprenant au moins une étape d'hydrolyse acide au moyen d'un acide fort choisi parmi les acides chlorhydrique, phosphorique et sulfurique, de préférence l'acide chlorhydrique.

Avantageusement, l'hydrolysat utilisé selon l'invention est obtenu par un procédé de préparation dans lequel la matière kératinique est une matière kératinique de préférence de volaille, comprenant au moins les étapes suivantes, dans cet ordre :
- soumettre la matière kératinique à au moins une hydrolyse acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton,
- éventuellement le sécher.

De préférence, la tyrosine et la cystine sont extraites dudit hydrolysat avant le séchage éventuel, de préférence cette extraction est effectuée au moyen d'une base minérale.

L'hydrolysat selon l'invention est obtenu à partir de matières kératiniques naturelles, avantageusement à partir de plumes de volailles. A titre de volailles, on peut citer les poules, poulets, dindes, canards, oies...

En particulier, l'hydrolysat selon la présente invention n'est pas obtenu à partir de kératine humaine tels que les cheveux.

Le procédé de préparation de l'hydrolysat de kératine selon l'invention met en œuvre au moins une hydrolyse au moyen d'un acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton.

Le pourcentage en petits peptides - présentant une masse moléculaire inférieure ou égale à 800 Dalton - dans l'hydrolysat va généralement de 5 à 12 % en poids par rapport au poids total de l'hydrolysat.

L'hydrolyse de la kératine est réalisée au moyen d'un acide de préférence un acide fort choisi parmi les acides chlorhydrique, phosphorique et sulfurique, de préférence l'acide chlorhydrique. De préférence l'acide fort est utilisé en une concentration allant de 10 à 30%, de préférence de 15 à 25%.

L'hydrolyse est généralement effectuée pendant une durée allant de 1 heure à 8 heures, de préférence allant de 6 à 7 heures à une température allant de 100 à 115°C, de préférence de 110 à 115°C. L'hydrolyse peut être effectuée en plusieurs étapes, par exemple 2, 3 ou 4 étapes.

Selon une variante particulière, l'hydrolyse est effectuée en deux étapes :
- une première hydrolyse réalisée à une température allant de 60 à 80°C pendant une période allant de 4 à 5 heures puis
- une deuxième hydrolyse réalisée à une température allant de 100 à 115°C pendant une période allant de 5 à 7 heures,
les deux hydrolyses pouvant être réalisées sans étape de pause intermédiaire ou en effectuant une étape de pause intermédiaire comprise entre 1 heure et 7 jours.

Plus précisément la première hydrolyse est réalisée à 72°C pendant 4,5 heures et la deuxième hydrolyse est réalisée à 107°C pendant 6 heures, une pause intermédiaire de 24 à 80 heures étant effectuée entre les deux hydrolyses.

L'hydrolyse, réalisée en une ou plusieurs étapes, est avantageusement suivie d'au moins une étape d'extraction de la cystine et de la tyrosine.

L'étape d'extraction de la cystine et de la tyrosine est réalisée au moyen d'une base, de préférence choisie parmi l'hydroxyde de sodium, l'hydroxyde de potassium, de préférence l'hydroxyde de sodium. L'ajout d'une base à l'hydrolysat permet de faire précipiter les acides aminés les moins solubles (cystine, tyrosine majoritairement), les rendant ainsi séparables de la phase liquide par des techniques adéquates, telles que la filtration ou l'essorage.

Les étapes d'hydrolyse et d'extraction de la cystine et de la tyrosine peuvent être suivies d'étapes optionnelles de purification de l'hydrolysat obtenu.

L'invention vise encore un procédé de préparation de l'hydrolysat dans lequel la tyrosine et la cystine sont extraites dudit hydrolysat et la phase liquide obtenue après l'extraction de la cystine et de la tyrosine est dessalée.

En particulier, la phase liquide obtenue après l'extraction de la cystine et de la tyrosine peut être dessalée pour en extraire les sels formés par action de la base sur l'acide, et obtenir ainsi une phase liquide dessalée.

Les étapes d'hydrolyse, d'extraction de la cystine et de la tyrosine, et de dessalement, peuvent être suivies d'étapes optionnelles de concentration et de séchage par exemple par atomisation.

Les étapes de dessalement, de concentration et de séchage sont des étapes classiques dont la mise en œuvre relève des compétences de l'homme du métier.

L'étape d'extraction de la cystine et de la tyrosine peut être suivie d'une étape optionnelle de récupération de certains acides aminés du précipité par re-dissolution de celui-ci dans l'acide, puis re-précipitation avec une base, les acides aminés à récupérer se trouvant alors dans la phase liquide, qui peut être adjointe à la phase liquide issue du premier essorage.

De préférence, l'hydrolysat utilisé selon la présente invention comprend moins de 1 % en poids de tyrosine par rapport au poids total de l'hydrolysat, de manière préférée moins de 0,5%, de manière encore préférée, l'hydrolysat ne contient pas de tyrosine, les seules traces de tyrosine étant dues aux limites des conditions opératoires et du matériel mis en œuvre lors de l'étape d'extraction.

De préférence, l'hydrolysat selon la présente invention comprend moins de 2,5%, de préférence moins de 1,5% et de manière préférée moins de 1% en poids de cystine par rapport au poids total de l'hydrolysat, de manière encore préférée, l'hydrolysat ne contient pas de cystine.

En outre, dans la mesure où l'hydrolysat selon l'invention n'est pas obtenu dans des conditions réductrices, il ne comprend pas de cystéine.

### Utilisations

Selon la présente invention, l'hydrolysat est utilisé avantageusement, soit en mélange avec le support de culture, soit en application sur le support de culture, notamment par arrosage ou pulvérisation. Avantageusement, le support de culture est le sol agricole.

Selon une première variante, l'hydrolysat est utilisé en mélange avec le support de culture une quantité allant de 100 g à 1000 g, de préférence de 200 g à 700 g et de manière préférée de 550 g à 650 g en matière active d'hydrolysat par m³ de support de culture.

L'hydrolysat peut également être utilisé sous forme liquide en une quantité allant 0,4 L à 2 L par m³ de support de culture de préférence de 1 L à 1,4 L par m³ de support de culture. En pratique, l'hydrolysat est souvent utilisé sous forme de bouillie liquide, généralement à une concentration allant de 0,1 g/L à 1 g/L et avantageusement de 0,5 g/L.

Généralement, le traitement c'est-à-dire l'utilisation de l'hydrolysat est effectué une seule fois avant la plantation de préférence dans les 6 mois précédant la plantation. Lorsque le support de culture est un sol agricole, le traitement peut être fait le jour même, avant la plantation.

Alternativement, il peut également être effectué en plusieurs fois, de préférence entre 3 et 5 fois entre 7 et 15 jours d'intervalle tout au long du développement de la culture.

Selon une deuxième variante, l'hydrolysat est utilisé en application sur le support de culture dans une quantité allant de 500 g à 5000 g, de préférence 1500 g en matière active d'hydrolysat par 10000 m² de support de culture.

L'application est effectuée par saupoudrage, pulvérisation ou arrosage en fonction de la forme de l'hydrolysat. L'hydrolysat peut également être utilisé sous forme liquide en une quantité allant 1L à 10 L, de préférence 3 L par 10000 m² de support de culture. En pratique, l'hydrolysat est souvent utilisé sous forme de bouillie liquide, généralement à une concentration allant de 0,1 g/L à 1 g/L avantageusement de 0,5 g/L.

Généralement, le traitement c'est-à-dire l'utilisation de l'hydrolysat est effectué une seule fois avant la plantation de préférence dans les 6 mois précédant la plantation. Lorsque le support de culture est un sol agricole, le traitement peut être fait le jour même, avant la plantation.

Alternativement il peut également être effectué en plusieurs fois, de préférence entre 3 et 5 fois entre 7 et 15 jours d'intervalle tout au long du développement de la culture.

Selon la présente invention, l'hydrolysat peut être utilisé avec au moins un agent choisi parmi les oligoéléments, les minéraux, la lignine et ses dérivés, l'acide humique, l'acide fulvique, les extraits d'algues, la vinasse, la mélasse et les matières organiques tels que les fumiers, les coproduits d'origine animale.

Selon la présente invention, l'hydrolysat peut également être utilisé en formulation avec au moins un agent choisi parmi les produits phytopharmaceutiques, les agents de biocontrôle, les biostimulants des plantes, les produits à base de microorganismes.

De manière particulière, l'hydrolysat peut être utilisé avec au moins un microorganisme choisi parmi les champignons et les bactéries. Les champignons sont de préférence choisis parmi les champignons endomycorhiziens ; les *Trichoderma* spp et en particulier les *Trichoderma harzianum, Trichoderma asperellum, Trichoderma atroviride* ; les *Coniothyrium minitans;* les *Glomus mosseae* et *Glomus spp.;* les *Saccharomyces cerevisiae* et les bactéries étant de préférence choisies parmi les *Bradyrhizobium japonicum,* les *Bacillus spp* en particulier les *Bacillus amyloliquefaciens* et *Bacillus mucilaginosus;* les *Pseudomonas spp* en particulier les *Pseudomonas fulva, Pseudomonas fluorescens* et *Pseudomonas putida.*

A titre d'exemples, on peut citer les produits présentés dans le tableau 1 suivant.

**[Tableau 1]**

| Fournisseur | Produit | Champignons | Bactéries |
|---|---|---|---|
| Actura^{®} | Resid MG^{®} | Champignons endomycorhiziens | |
| Agrifutur^{®} | Nitrogen^{®} | | *Bradyrhizobium japonicum* |
| Agrostar^{®} | Baci Start M4^{®} | | *Bacillus amyloliquefaciens* |
| BASF ^{®} | Rhizoflo soja^{®} | | *Bradyrhizobium japonicum* |
| | | | *Pseudomonas fluorescens* |
| Biovitis^{®} | Cérès Carpoes Heles^{®} | *Trichoderma harzianum* | *Bacillus methylotrophicus* |
| Cybele Agro Care^{®} | Bacteriolis Rhizobacteriolis^{®} | | *Pseudomonas fulva + Pseudomonas fluorescens* |
| Compo expert ^{®} | Agrosil turf Argin^{®} | | *Bacillus amyloliquefaciens* |
| De Sangosse^{®} | Rizoliq Top^{®} | | *Bradyrhizobium japonicum* |
| | | *Coniothyrium minitans* | *Pseudomonas fluorescens* |
| FCA^{®} | Myco'sol C^{®} | *Trichoderma asperellum* | *Pseudomonas putida* |
| Fertem is^{®} | Fertevie Rhiz^{®} | | *Bacillus amyloliquefaciens* |
| Elephant vert^{®} | Ovalis rhizofertil^{®} | | *Pseudomonas putida* |
| Gaiago SAS^{®} | Free PK^{®} | | *Bacillus mucilaginosus* |
| If Tech^{®} | Mycor^{®} | Champignon endomycorhizien | |
| Inoculum Plus ^{®} | Symbivit^{®} | Champignons endomycorhiziens | |
| | | Champignon endomycorhizien | |
| Hello Nature ^{®} | CONDOR^{®} | *Trichoderma atroviride* | Bactérie de la rhizosphère |
| Hello Nature ^{®} | TEAM Horto^{®} | Champignon endomycorhizien | Bactérie de la rhizosphère |
| | | *Trichoderma atroviride* | |
| | | *Glomus mosseae* | |
| Hello Nature ^{®} | TEAM Enrobage^{®} | Champignon endomycorhizien | Bactérie de la rhizosphère |
| | | *Trichoderma atroviride* | |
| | | *Glomus mosseae* | |
| | | *Trichoderma atroviride* | Bactérie de la rhizosphère |
| Hello Nature ^{®} | TIFI^{®} | *Glomus spp.* | |
| Lallemant Plant Care^{®} | Rhizocell^{®} | | *Bacillus amyloliquefaciens sp* |
| Plantworks^{®} | Root grow^{®} | Champignons endomycorhiziens | |
| Premier Tech GHA^{®} | Myke Pro^{®} | Champignon endomycorhizien | |
| Koppert^{®} | Trianum-P^{®} | *Trichoderma harzianum* | |
| Agrauxine^{®} | Tri-Soil^{®} | *trichoderma atroviride* | |
| Agrauxine^{®} | Moka^{®} | *Saccharomyces cerevisiae* | |

Les exemples qui suivent visent à illustrer l'invention sans en limiter la portée.

### Exemples

### Exemple 1- Hydrolysat

Préparation de l'hydrolysat

### Hydrolyse

Dans un réacteur/hydrolyseur de 55 000 litres, on introduit 9000 kg de plumes de volaille contenant 50% de matière sèche. Une hydrolyse chimique est réalisée en ajoutant 18 000 litres d'acide chlorhydrique (23%), l'hydrolyse est effectuée à 72°C pendant 4,5 heures.

Le produit obtenu est stocké pendant 48 heures en laissant sa température évoluer naturellement jusqu'à la température ambiante. Ensuite, une deuxième hydrolyse chimique est effectuée en chauffant à 107°C pendant 6 heures sans ajout d'acide.

L'hydrolysat obtenu comprend 88 % en poids d'acides aminés libres, le reste des acides aminés de l'hydrolysat étant sous la forme de petits peptides présentant une masse moléculaire inférieure ou égale à 800 Dalton.

### Purification

L'hydrolysat est ensuite mis à décanter afin d'éliminer la graisse apportée par la matière kératinique qui surnage en surface de la phase aqueuse. On procède à une élimination de l'acide chlorhydrique introduit en excès à l'étape d'hydrolyse. 8000 kg de concentrât sont récupérés. Puis on y ajoute 4500 kg d'eau pour obtenir 12500 kg de concentrât dilué.

### Ajustement du pH

La soude à 30,5% est ajoutée à l'hydrolysat, pour porter le pH à une valeur entre 4 et 5. Lors de l'ajout de la soude, les acides aminés les moins solubles notamment cystine, tyrosine, leucine, isoleucine précipitent au moins partiellement. Les autres acides aminés restent complètement en solution dans la phase liquide.

### Essorage

La suspension est alors placée dans une essoreuse, pour séparer le précipité (2000 kg), et récupérer la phase liquide (17000 kg) dans une cuve.

### Récupération de certains acides aminés du précipité

Le précipité (2000 kg) est redissout dans l'acide chlorhydrique à 4% environ (7000 kg), décoloré par passage sur charbon, puis la solution est neutralisée par ajout de soude à 30% (1250 kg). Un nouveau précipité se forme, qui est séparé par essorage : on obtient 650 kg de précipité et 8750 kg de phase liquide.

### Réunion des phases liquides et dessalement

Les phases liquides issues du premier essorage (17000 kg) et du second essorage (8750 kg) sont réunies et dessalées conjointement par électrodialyse pour donner environ 17500 kg de phase liquide dessalée.

### Concentration et/ou séchage

La phase liquide est concentrée par évaporation d'eau pour atteindre 55 % de matière sèche (hydrolysat sous forme liquide), elle peut être ensuite séchée par atomisation afin d'obtenir un hydrolysat sous forme de poudre contenant 98% de matière sèche.

Dans le tableau 2 sont présentées les teneurs et fractions pondérales en chacun des acides aminés dans l'hydrolysat sous forme de poudre.

**[Tableau2]**

| | **Teneur (% poids) dans la composition** | **Fraction pondérale AA libres/AA totaux** |
|---|---|---|
| Ac. Aspartique | 6,44 | 98% |
| Thréonine | 4,32 | 99% |
| Sérine | 10,72 | 100% |
| Ac. Glutamique | 9,78 | 95% |
| Glycine | 7,30 | 97% |
| Alanine | 4,38 | 97% |
| Valine | 7,30 | 70% |
| Cystine | 1,93 | 63% |
| Méthionine | 0,48 | 100% |
| Isoleucine | 4,37 | 77% |
| Leucine | 7,23 | 92% |
| Tyrosine | 0,77 | 81% |
| Phénylalanine | 4,44 | 96% |
| Lysine | 1,71 | 91% |
| Histidine | 0,60 | 93% |
| Arginine | 5,84 | 92% |
| Proline | 9,89 | 99% |
| **total** | **87,44%** | |

La teneur en acides aminés libres est de 93,1% en poids par rapport au poids des acides aminés totaux (libres et liés). Dans les exemples qui suivent, lorsque l'hydrolysat selon l'exemple 1 est utilisé sous forme de poudre, il correspond à une teneur en matière sèche de 98,0% en poids et à une teneur en azote de 12% ; l'hydrolysat selon l'exemple 1 est utilisé sous forme liquide il correspond à une teneur en matière sèche de 55% et une teneur en azote de 7,1%.

**Exemples 2** Mesure de la respiration microbienne des sols en continu par le système Oxitop ^{®} control.

Cette méthode est basée sur le fait que, durant la respiration microbienne des sols, les substances organiques sont oxydées en dioxyde de carbone (CO₂) et eau, alors que les micro-organismes aérobies consomment l'oxygène O₂. Elle vise à mesurer l'activité des microorganismes.

### Dispositif et protocole

La mesure de l'activité respiratoire des sols est réalisée à l'aide du système OxiTop^{®} Control. L'appareillage se compose d'une jarre (modèle B6M) munie d'un système de fermeture hermétique à l'air ambiant, d'une tête de mesure permettant d'enregistrer les variations de pression, et d'un contrôleur Oxitop^{®} OC 110 permettant l'enregistrement puis la récupération des données par mesures dans l'infrarouge. L'incubation s'effectue dans une armoire thermorégulatrice avec une résolution n'excédant pas 0,1°C. Deux types de respiration peuvent être mesurés sur un échantillon de sol : la respiration basale et la respiration induite.

La respiration basale correspond à la respiration du sol sans ajout de matière organique.

La respiration induite, mieux connue sous le terme SIR (Substrate-Induced Respiration) correspond à la respiration du sol suite à l'ajout d'une source de carbone, facilement métabolisable pour les microorganismes, le glucose.

La respiration du sol est mesurée en suivant l'évolution de la pression en O₂ dans une jarre hermétique contenant le sol ; le CO₂ étant quant à lui piégé par de la soude. L'évolution de la pression permet de déterminer la quantité d'O₂ consommée au cours de la respiration. En pratique, 30 g de sol frais, sont introduits dans la jarre ; dans le cas de la respiration induite, 100 mg de glucose sont mélangés au sol. Un piège à CO₂ contenant 20 mL de NaOH 0,2 N est également introduit dans la jarre. L'ensemble est fermé hermétiquement à l'aide d'un joint, de graisse de silicone et d'étriers. Les variations de pression sont mesurées en continu durant 5 jours à une température fixe de 20°C. Au bout de 5 jours, les données sont téléchargées et un modèle linéaire est calculé pour établir la pente exacte de perte de pression dans la jarre. Les résultats sont exprimés en mg d'O₂ consommé par jour et par gramme de sol sec, c'est-à-dire passé à l'étuve jusqu'à évaporation totale de l'eau, selon la formule 1: [Math 1] $SR = \frac{M \left(O2\right) . Vfr . dP}{R . T . M \left(DS\right) . Xd}$

où SR : respiration du sol ; M(O₂) : masse molaire de O₂ ; Vfr : volume libre ; dP : différence de pression ; R : constante des gaz parfaits ; T : température Kelvin ; M(DS) : masse de sol sec ; Xd : nombre de jours.

Les résultats obtenus (mesure de la chute de pression) sont ensuite repris pour exprimer la consommation d'oxygène en mg d'O₂ consommé par gramme de sol.

Le sol dont la respiration est à mesurer est hydraté à 50% de sa capacité au champ c'est-à-dire la capacité de rétention maximale en eau du sol. Chaque pot contient 30 g de sol hydraté et 100 mg de glucose afin de favoriser l'activité microbienne. Cette mesure est appelée respiration induite par le substrat.

Les mesures sont effectuées sur 4 types de supports différents : 1- sol agricole dont la composition est présentée dans le tableau 3 suivant.

**[Tableau 3]**

| Paramètre | Valeur | Unité |
|---|---|---|
| Argile | 12 | % |
| Limons fins | 18,2 | % |
| Limons grossiers | 18,4 | % |
| Sables fins | 14,2 | % |
| Sables grossiers | 35,4 | % |
| CEC | 8 | Meq/100g |
| pH eau | 6,7 | - |
| P₂O₅ | 198 | mg/kg |
| K₂O | 317 | mg/kg |
| MgO | 191 | mg/kg |
| CaO | 1677 | mg/kg |
| Matières Organiques | 1,6 | % |
| carbone | 0,94 | % |
| Azote total | 0,1 | % |
| C/N | 9,7 | - |

2-Sol fatigué c'est-à-dire un mélange composé de 30% poids de sol agricole et 70% poids de sable ;
3- Support de culture recomposé, fertilisé, composé de tourbe blonde, tourbe noire de sphaignes, argile granules + engrais bio selon des rapports 6-8-15 de N-P-K ajouté en une quantité de 3 kg/m³ de sol agricole;
4- Support de culture recomposé avec une fertilisation réduite de moitié (demi fertilisé) composé de tourbe blonde, tourbe noire de sphaignes, argile granules + engrais bio selon des rapports 6-8-15 de N-P-K ajouté en une quantité de 1,5 kg/m3 de sol agricole.

En outre, pour chacun de ces sols, trois séries de mesures ont été effectuées :
- sol sans traitement préalable,
- sol traité avec l'hydrolysat sous forme de poudre selon exemple 1 en une quantité de 300 g/m³ c'est-à-dire le traitement nommé H300 ci-dessous et
- sol traité avec l'hydrolysat sous forme de poudre selon exemple 1 en une quantité de 600 g/m³ c'est-à-dire le traitement nommé H600 ci-dessous.

Les mélanges sont effectués en mélangeant le produit aux différents types de sol, les sols sont ensuite laissés incuber 17 jours puis 4 prélèvements sont réalisés.

Les exemples ont porté sur la mesure de la valeur maximale c'est-à-dire l'asymptote de la courbe, atteinte en fin d'incubation, mesurée en fonction du type de support. Cette valeur maximale est exprimée en mg d'O₂/ g de matière sèche (MS).

### Exemple 2.1

Dans le tableau 4, sont présentés les résultats obtenus sur sol agricole et sur sol fatigué : sans traitement (ligne 2), après traitement H300 (ligne 3) et après traitement H600 (ligne 4). Les valeurs sont exprimées en mg d'O₂/ g de matière sèche (MS) et les valeurs entre parenthèses (pourcentages) des lignes 3 et 4 correspondent à la variation par rapport aux résultats de la ligne 2 sans traitement.

**[Tableau 4]**

| **Type de support** | **Valeur max** | **Type de support** | **Valeur max** |
|---|---|---|---|
| Sol agricole | 0,052 a | Sol fatigué | 0,031 a |
| Sol agricole + H300 | 0,096 (+83%) b | Sol fatigué + H300 | 0,084 (+169%) b |
| Sol agricole + H600 | 0,147(+181%) c | Sol fatigué + H600 | 0,15 (+378%) c |

L'analyse statistique des résultats, indépendante pour chaque type de sol, a été réalisée par Analyse de la Variance (ANOVA) qui permet la comparaison entre elles des moyennes de chaque groupe pour les différents traitements considérés ; cette analyse permet d'affirmer si ces moyennes sont différentes ou pas entre elles sur le plan statistique. Ainsi, les valeurs moyennes du tableau avec des lettres différentes sont statistiquement différentes aves un risque d'erreur au seuil de 5 % : une valeur notée « a » est différente de « b », elle-même différente de « c ».

Les résultats de la deuxième ligne du tableau 4 montrent que le sol fatigué présente une respiration inférieure à celle du sol agricole.

Les résultats des troisième et quatrième lignes du tableau 4 montrent que les traitements du sol fatigué au moyen de H300 et H600 lui permettent de recouvrer une respiration microbienne de l'ordre de celle du sol agricole après traitement similaire notamment dès 17 jours.

On observe en outre un effet dose du produit. En effet, plus la concentration d'hydrolysat est importante (cf H600), plus la respiration mesurée augmente, ce qui traduit une augmentation de la population microbienne dans le sol ou de son activité par rapport à un sol n'ayant pas reçu d'hydrolysats.

### Exemple 2.2

Dans le tableau 5, sont présentés les résultats obtenus sur sol fertilisé et sur sol demi-fertilisé : sans traitement (ligne 2), après traitement H300 (ligne 3) et après traitement H600 (ligne 4). Les valeurs entre parenthèses des lignes 3 et 4 correspondent aux pourcentages de la variation par rapport aux résultats de la ligne 2 sans traitement.

**[Tableau 5]**

| **Type de support** | **Valeur max** | **Type de support** | **Valeur max** |
|---|---|---|---|
| Sol cult. fert. | 0,00079 a | Sol cult. ½ fert. | 0,00115 a |
| Sol cult. fert. +H300 | 0,00143 (+81%) b | Sol cult. ½ fert.+ H300 | 0,00199 (+73%) b |
| Sol cult. fert.+ H600 | 0,00224 (+183%) c | Sol cult. ½ fert + H600 | 0,00253 (+120%) c |

Les traitements H300 et H600 permettent une amélioration significative de la respiration des supports de culture fertilisés et semi fertilisés.

Les lettres dans le tableau correspondent à l'analyse statistique réalisée par la méthode ANOVA.

### Exemple 2.3

Une série de mesures de l'activité des sols au moyen du système OxiTop control^{®} a été effectuée sur les sols agricole, fatigué et demi fertilisé définis ci-dessus suite aux traitements suivants, apportant tous la même quantité d'azote N :
A : traitement avec l'hydrolysat de l'exemple 1 sous forme liquide, comprenant 7,1% de N organique, en une quantité de 1014 L/m3, soit 72 g N organique/m³ de substrat ;
B : traitement comparatif avec un hydrolysat de kératine du commerce comprenant 62% d'acides aminés totaux et 10% d'acides aminés libres comprenant 10% de N organique, en une quantité de 700 g/m³, soit 720*10%=72 g N organique/m³ de substrat ;
U : traitement à l'urée, comprenant 46,64% de N minéral, en une quantité de 154 g/m3, soit 72 g N minéral/m³ de substrat.

A nouveau, les mélanges sont effectués en mélangeant le produit aux différents types de sol, les sols sont ensuite laissés incuber 17 jours puis 4 prélèvements sont réalisés.

En outre une série de témoins, c'est-à-dire une série de mesures sur supports de cultures non traités, a été réalisée.

Les résultats obtenus sont présentés dans le tableau 6 et sont exprimés en mg d'O₂/ g de matière sèche (MS).

**[Tableau 6]**

| | Sol agricole | Sol fatigué | Sol cult. ½ fert. |
|---|---|---|---|
| Témoin | 0,431 c | 0,098 c | 1,763 b |
| Traitement A (conforme) | 1,659 (+385%) a | 1,586 (+1618%) a | 4,722 (+268%) a |
| Traitement B (comparatif) | 1,066 (+247%) b | 0,845 (+862%) b | 4,030 (+229%) a |
| Traitement U | 0,511 (+19%) c | 0,179 (+83%) c | 2,231 (+27%) b |

On observe que les traitements U à l'urée -azote minéral- ne sont pas significativement différents des témoins, alors que les traitements A et B - azote organique- sont significativement supérieurs aux témoins. Les résultats des traitements A, conformes à l'invention, sont significativement supérieurs aux comparatifs sur sols agricoles et fatigués.

Les lettres dans le tableau correspondent à l'analyse statistique réalisée par la méthode ANOVA.

**Exemples 3-** mesure de la respiration microbienne des sols par le système colorimétrique MicroResp ^{®}

Cette méthode permet de mesurer la respiration des microorganismes du sol en présence ou non de divers substrats, le résultat étant exprimé, après calcul, en quantité de CO₂ émis. Ainsi les populations de microorganismes capables d'utiliser spécifiquement un substrat particulier vont s'exprimer. Cet exemple permet de déterminer l'influence de l'hydrolysat selon l'invention sur la respiration de micro-organismes particuliers c'est-à-dire capables d'utiliser un substrat particulier.

### Dispositif et protocole

Ce système permet de mesurer la respiration du sol par une méthode colorimétrique.

Le dispositif comprend :
- une microplaque munie de puits dits " puits supérieurs" contenant le système de détection colorimétrique ;
- une plaque à puits profonds dits " puits inférieurs" contenant le sol à analyser et, éventuellement les substrats carbonés (ladite plaque permet d'analyser jusqu'à 96 échantillons) ;
- les deux plaques sont reliées par un joint perforé, il permet d'individualiser les puits en connectant chaque puits inférieur au puits supérieur correspondant.

La réaction chimique entre le CO₂ formé par la respiration de la microflore du sol et la solution indicatrice contenant le rouge de Crésol, correspond à la formule CO₂ + H₂O + HCO₃⁻ ↔ 2 CO₃²⁻ + 3H⁺

Le CO₂ dégagé par l'activité catabolique des microorganismes du sol provoque un changement de couleur du gel agar proportionnel à la quantité dégagée. La plaque de détection permet de mesurer la production de CO₂ par le changement de couleur et par conséquent d'absorbance de la plaque.

Le pourcentage de CO₂ produit par gramme de sol pendant les six heures d'incubation est ensuite calculé.

Lorsqu'aucun substrat carboné n'est ajouté au sol, le CO₂ dégagé correspond à la respiration basale des microorganismes présents.

Lorsqu'un substrat particulier (comprenant du carbone, azote et/ou phosphore) est ajouté au sol, le CO₂ dégagé correspond à la respiration basale des microorganismes capables d'utiliser spécifiquement ce substrat particulier. Cette mise en œuvre permet de déterminer l'effet de l'hydrolysat sur ces microorganismes particuliers. Les substrats particuliers utilisés sont le saccharose et le xylose à titre d'exemples de substrats comprenant du carbone, l'urée et l'alanine à titre d'exemples de substrats comprenant de l'azote et l'acide phytique à titre de substrat comprenant du phosphore.

La respiration basale du sol correspond au dégagement de CO₂ des puits dit 'témoin' dans lesquels aucun substrat n'a été ajouté au sol. Après 6 heures d'incubation des microplaques à l'étuve à 29°C, le changement de couleur du gel est mesuré au spectrophotomètre (λ =570 nm) et permet, après calibration, d'estimer le taux de respiration pour chaque puits (en µg C-CO2 g ⁻¹ sol h⁻¹). Quatre répétitions ont été réalisées par échantillon de sol et par substrat.

### Exemple 3.1

Dans le tableau 7, sont présentés les résultats obtenus sur sol agricole (auquel a été ajouté de l'eau ou les différents substrats), sans traitement (colonnes 2 et 4) après traitement H300 (colonne 3) et après traitement H600 (colonne 4). Les valeurs sont données en en µg C-CO₂ g ⁻¹ sol h⁻¹ et les valeurs entre parenthèses des colonnes 3 et 5 correspondent à la variation par rapport aux valeurs de la colonne précédente.

**[Tableau 7]**

| **Support Substrat** | **Sol agricole a** | **Sol agricole a + H300** | **Sol agricole b** | **Sol agricole b + H600** |
|---|---|---|---|---|
| Eau (resp.basale) | 0,421 a | 0,535 (+27%) a | 0,384 a | 0,549 (+43%) a |
| Urée | 0,798 a | 0,836 (+5%) a | 1,054 a | 1,304 (+24%) a |
| Xylose | 0,576 ab | 0,471 (-18%) b | 0,788 a | 0,838 (+6%) a |
| Saccharose | 0,540 b | 0,664 (+23%) b | 0,807 ab | 1,151 (+43%) a |
| Alanine | 0,342 bc | 0,316 (-8%) c | 0,597 ab | 0,657 (+10%) a |
| Acide phytique | 0,425 ab | 0,380 (-11%) b | 0,588 ab | 0,599 (+11%) a |

L'ajout de l'hydrolysat 1 sous forme H300 ou H600 permet d'observer une tendance positive de l'augmentation de la respiration microbienne des sols en présence des différents substrats.

Les lettres dans le tableau 7 correspondent à l'analyse statistique réalisée par la méthode ANOVA indépendamment pour chaque substrat.

Le tableau 8 est basé sur les résultats présentés au tableau 7. Dans le tableau 8, colonnes 2 et 4, sont présentés les résultats obtenus sur sols fatigués sans traitement, en µg C-CO₂ g ⁻¹ sol h⁻¹, avec, entre parenthèses, la variation *versus (vs)* le sol agricole correspondant. Puis dans les colonnes 3 et 5 sont présentés les résultats obtenus sur sols fatigués après traitement H300 (colonne 3) et après traitement H600 (colonne 5) avec, entre parenthèses, la variation vs le sol fatigué correspondant.

**[Tableau 8]**

| | **Sol fatigué (% *vs* sol agricole)** | **Sol fatigué + H300 (% *vs* sol fatigué)** | **Sol fatigué (% *vs* sol agricole)** | **Sol fatigué + H600(% *vs* sol fatigué)** |
|---|---|---|---|---|
| Eau (resp.basale) | 0,079 (-81%) b | 0,089 (+12%) b | 0,185 (-52%) b | 0,375**(+103%)** b |
| Urée | 0,189 (-77%) b | 0,269 (+43%) b | 0,290(-72%) b | 0,640(**+121%**) a |
| Xylose | 0,083 (-86%) b | 0,103 (+24%) b | 0,204(-74%) b | 0,633(**+211%**) a |
| Saccharose | 0,131 (-76%) b | 0,182 (+39%) b | 0,258(-68%) b | 0,951(**+269%**) a |
| Alanine | 0,045 (-87%) c | 0,104 (+131%) c | 0,259(-57%) b | 0,460 (**+78%**) a |
| Acide phytique | 0,141 (-67%) a | 0,243 (+72%) a | 0,262(-51%) a | 0,280(+7%) a |

L'ajout de l'hydrolysat 1 sous forme H300 ou H600 permet d'augmenter significativement la respiration basale (eau) et l'activité respiratoire en présence des substrats suivants : urée, xylose, saccharose, alanine.

Les lettres dans le tableau 8 correspondent à l'analyse statistique réalisée par la méthode ANOVA indépendamment pour chaque substrat.

### Exemple 3.2

Dans le tableau 9 sont présentés les résultats obtenus sur sol fertilisé auquel ont été ajoutés de l'eau ou différents substrats, sans traitement (colonnes 2 et 4) après traitement H300 (colonne 3) et après traitement H600 (colonne 5). Les valeurs sont exprimées en µg C-CO₂ g ⁻¹ sol h⁻¹ et les valeurs entre parenthèses des colonnes 3 et 5 correspondent à la variation par rapport aux valeurs de la colonne précédente.

**[Tableau 9]**

| **Support Substrat** | **Sol fertilisé n°1** | **Sol fertilisé + H300 (% *vs* sol fertilisé n°1)** | **Sol fertilisé n°2** | **Sol fertilisé + H600 (% *vs* sol fertilisé n°2)** |
|---|---|---|---|---|
| Eau (resp.basale) | 1,028 b | 1,205 (+17%) ab | 1,086 b | 1,332 **(+23%)** a |
| Urée | 4,152 b | 4,933 **(+19%)** a | 4,072 b | 5,216 **(+28%)** a |
| Xylose | 2,69 a | 2,273 (-15%) a | 2,925 a | 3,45 (+18%) a |
| Saccharose | 3,293 c | 3,964 **(+20%)** b | 3,295 c | 4,608 **(+40%)** a |
| Alanine | 2,764 b | 2,712 (-2%) b | 2,955 b | 3,828 **(+30%)** a |
| Acide phytique | 2,914 a | 1,795 (-38%) a | 2,312 a | 2,282 (-1%) a |

L'ajout de l'hydrolysat 1 notamment dans les conditions H600 permet d'augmenter significativement la respiration basale et l'activité respiratoire du sol en présence de saccharose, alanine et d'urée.

Les lettres dans le tableau 9 correspondent à l'analyse statistique réalisée par la méthode ANOVA indépendamment pour chaque substrat.

Le tableau 10 est basé sur les résultats présentés au tableau 9. Dans le tableau 10, colonnes 2 et 4, sont présentés les résultats obtenus sur sols reconstitués demi fertilisés avec ou sans traitement, en µg C-CO₂ g ⁻¹ sol h⁻¹, avec, entre parenthèses, le pourcentage de variation *vs* le sol fertilisé correspondant. Puis dans les colonnes 3 et 5 sont présentés les résultats obtenus sur sols demi fertilisés après traitement H300 (colonne 3) et après traitement H600 (colonne 5) avec, entre parenthèses, le pourcentage de variation vs le sol fertilisé correspondant.

**[Tableau 10]**

| | **Sol ½ fertilisé n°1 (% *vs* sol fertilisé n°1)** | **Sol ½ fertilisé n°1 + H300 (% *vs* sol ½ fertilisé n°1)** | **Sol ½ fertilisé n°2 (% *vs* sol fertilisé n°2)** | **Sol ½ fertilisé n°2 + H600 (% *vs* sol ½ fertilisé n°2)** |
|---|---|---|---|---|
| Eau (resp.basale) | 1,168 (14%) c | 1,404(+20%) b | 1,476(+36%) b | 1,687(**+14%**) a |
| Urée | 3,536(-15%) c | 4,828(+37%) ab | 3,88 (-5%) bc | 5,148 **(+33%)** a |
| Xylose | 2,412(-10%) d | 4,105(+70%) b | 3,064 (+5%) c | 4,825 (**+57**%) a |
| Saccharose | 2,648(-20%) d | 4,713(+78%) b | 3,362 (+2%) c | 5,573 (**+66**%) a |
| Alanine | 2,799(+1%) d | 3,979(+42%) b | 3,509 (+19%) c | 4,921 (**+40**%) a |
| Acide phytique | 2,305 (-21%) b | 2,75 (+19%) ab | 2,511 (+9%) ab | 3,638 (+45%) a |

En comparant les colonnes 2 et 3 d'une part et les colonnes 4 et 5 d'autre part, on note que l'ajout de l'hydrolysat 1 sous forme H300 ou H600 permet une augmentation de la respiration dans les sols reconstitués ½ fertilisés. Cette augmentation est significativement différente avec la dose H600 par rapport au témoin.

Les lettres dans le tableau correspondent à l'analyse statistique réalisée par la méthode ANOVA indépendamment pour chaque substrat.

### Exemple 3.3

Une série de mesures de la respiration microbienne des sols par le système colorimétrique MicroResp^{®} a été effectuée sur les sols agricole, fatigué et demi fertilisé définis ci-dessus suite aux traitements suivants, apportant tous la même quantité d'azote N :
A : traitement avec l'hydrolysat de l'exemple 1 sous forme liquide, comprenant 7,1% de N organique, en une quantité de 1014 L/m³, soit 72g N organique/m³ de substrat ;
B : traitement comparatif avec un hydrolysat de kératine du commerce comprenant 62% d'acides aminés totaux et 10% d'acides aminés libres comprenant 10% de N organique, en une quantité de 700 g/m³, soit 720*10%=72 g N organique/m³ de substrat ;
U : traitement à l'urée, comprenant 46,64% de N minéral, en une quantité de 154g/m³, soit 72 g N minéral/m³ de substrat.

A nouveau, les mélanges sont effectués en mélangeant le produit aux différents types de sol, les sols sont ensuite laissés incuber 17 jours puis 4 prélèvements sont réalisés.

En outre, une série de témoins, c'est-à-dire une série de mesures sur supports de cultures non traités, a été réalisée.

Les résultats obtenus sont présentés dans les tableaux 11 à 13 et sont exprimés en en µg C-CO₂ g ⁻¹ sol h⁻¹, avec tableau 11 correspondant au sol agricole, tableau 12 correspondant au sol fatigué et tableau 13 correspondant au sol demi fertilisé.

**[Tableau 11] - sol agricole**

| | **Témoin** µg/g/h | **A** µg/g/h | **A en% /témoin** | **B** µg/g/h | **B en% /témoin** | **U** µg/g/h | **U en% /témoin** |
|---|---|---|---|---|---|---|---|
| Eau | 0,797 c | 2,215 a | 178% | 1,590 b | 99% | 1,549 b | 94% |
| Urée | 1,400 c | 3,158 a | 126% | 2,444 b | 75% | 2,003 b | 43% |
| Xylose | 1,391 c | 3,126 a | 125% | 2,162 b | 55% | 1,836 b | 32% |
| Saccha rose | 1,563 c | 3,329 a | 113% | 2,428 b | 55% | 2,541 b | 63% |
| Alanine | 1,199 c | 2,643 a | 120% | 1,895 b | 58% | 1,901 b | 59% |
| Acide phytiq. | 1,081 c | 1,547 a | 43% | 1,386 b | 28% | 1,459 b | 35% |

Les résultats de la colonne 4, comparés à ceux des colonnes 6 et 8, montrent que le traitement A, conforme à l'invention, permet une respiration significativement plus importante que les autres traitements, urée (traitement U) ou produit du commerce (traitement B).

Les lettres dans le tableau correspondent à l'analyse statistique réalisée par la méthode ANOVA indépendamment pour chaque substrat.

**[Tableau 12] - sol fatigué**

| | **Témoin** µg/g/h | **A** µg/g/h | **A en% /témoin** | **B** µg/g/h | **B en% /témoin** | **U** µg/g/h | **U en% /témoin** |
|---|---|---|---|---|---|---|---|
| Eau | 0,346 c | 1,801 a | 421% | 0,981 b | 184% | 0,545 c | 58% |
| Urée | 0,705 c | 1,595 a | 126% | 1,113 b | 58% | 0,726 c | 3% |
| Xylose | 0,542 c | 1,790 a | 230% | 1,454 b | 168% | 0,693 c | 28% |
| Saccha rose | 0,836 c | 2,468 a | 195% | 1,649 b | 97% | 0,948 c | 13% |
| Alanine | 0,549 c | 1,943 a | 254% | 1,000 b | 82% | 0,635 c | 16% |
| Acide phytiq. | 0,471 c | 0,757 a | 61% | 0,582 b | 24% | 0,647 c | 37% |

Les résultats de la colonne 4, comparés à ceux des colonnes 6 et 8, montrent que le traitement A, conforme à l'invention, permet une respiration significativement plus importante que les autres traitements. Les lettres dans le tableau correspondent à l'analyse statistique réalisée par la méthode ANOVA indépendamment pour chaque substrat.

**[Tableau 13] - sol demi fertilisé**

| | **Témoin** µg/g/h | **A** µg/g/h | **A en% /témoin** | **B** µg/g/h | **B en% /témoin** | **U** µg/g/h | **U en% /témoin** |
|---|---|---|---|---|---|---|---|
| Eau | 2,055 d | 8,568 a | 317% | 8,151 b | 297% | 3,608 c | 76% |
| Urée | 8,314 d | 18,163 a | 118% | 20,763 b | 150% | 8,934 c | 7% |
| Xylose | 6,162 d | 25,519 a | 314% | 21,180 b | 244% | 7,892 c | 28% |
| Saccha rose | 7,699 d | 34,088 a | 343% | 23,859 b | 210% | 9,210 c | 20% |
| Alanine | 6,179 d | 32,504 a | 426% | 20,798 b | 237% | 6,754 c | 9% |
| Acide phytiq. | 4,935 d | 11,299 a | 129% | 6,734 b | 36% | 5,970 c | 21% |

Les résultats de la colonne 4, comparés à ceux des colonnes 6 et 8, montrent que le traitement A, conforme à l'invention, permet une respiration significativement plus importante que les autres traitements.

Les lettres dans le tableau correspondent à l'analyse statistique réalisée par la méthode ANOVA indépendamment pour chaque substrat.

### Exemple 4- mesure de la respiration microbienne des sols plantés

La détermination quantitative de l'activité enzymatique sur des sols plantés de plants de fraises a été déterminée.

Les supports de culture étudiés sont d'un part un sol agricole, et d'autre part un sol fatigué sur lequel était planté un verger depuis 56 ans.

Pour chacun de ces supports de culture, ont été effectuées des mesures sur sol non traité (contrôle), sur sol traité par l'hydrolysat 1 sous forme sèche selon 3 applications à 2 kg/Ha et par l'hydrolysat sous forme liquide contenant 55% d'hydrolysat sec selon 3 applications à 4 L/Ha.

Les traitements ont été effectués avant la plantation en cours de culture par arrosage. Les mesures des activités enzymatiques (déshydrogénase), de l'activité respiratoire du sol et des analyses microbiologiques ont été effectuées 1 mois, 3 mois et 6 mois après la plantation puis une moyenne est calculée.

Le tableau 14 présente l'activité de la déshydrogénase mesurée sur sol fatigué et sur sol agricole, la déshydrogénase traduisant l'activité globale respiratoire du sol.

**[Tableau14]**

| | Sol fatigué cm³H₂.24h⁻¹.Kg⁻¹d.m.sol | Sol agricole cm³H₂.24h⁻¹.Kg⁻¹d.m.sol |
|---|---|---|
| Contrôle | 1,47 a | 4,47 a |
| Hydrolysat 1 forme sèche | 2,12 (+44%) a | 6,01 (+34%) b |
| Hydrolysat 1 forme liquide | 3,4 (+131%) b | 5,29 (+18%) c |

Les lettres dans le tableau correspondent à l'analyse statistique réalisée par la méthode ANOVA. Deux analyses indépendantes ont été réalisées en fonction du sol.

L'hydrolysat 1, conforme à l'invention, qu'il soit sous forme liquide ou solide, permet d'augmenter significativement l'activité déshydrogénase des sols fatigués et agricoles.

Le tableau 15 présente l'activité de la protéase mesurée sur sol fatigué, la protéase traduisant l'activité globale enzymatique du sol.

**[Tableau15]**

| | Sol fatigué mg tyrosine h⁻¹.Kg⁻¹d.m.sol |
|---|---|
| Contrôle | 1,63 a |
| Hydrolysat 1 forme sèche | 3,39 (+44%) b |
| Hydrolysat 1 forme liquide | 3,57(+44%) b |

Les lettres dans le tableau correspondent à l'analyse statistique réalisée par la méthode ANOVA. Deux analyses indépendantes ont été réalisées en fonction du sol.

L'hydrolysat 1, conforme à l'invention, qu'il soit sous forme liquide ou solide, permet d'augmenter significativement l'activité protéase des sols fatigués.

Le tableau 16 présente l'activité respiratoire du sol mesurée sur sol fatigué et sur sol agricole. L'activité respiratoire du sol en fonction du type de sol a été déterminée sur la base de la quantité de CO₂ libérée par la méthode d'absorption Go 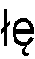 biowska et P 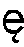 dziwilk décrite dans Go 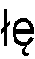 biowska, J., and Z. P 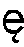 dziwilk. 1984. CO₂ release as an index of biological activity of cultivated soils. Acta Microbiologica Polonica 33:249-56. Toutes les analyses ont été faites en quatre répétitions pour chaque combinaison d'expériences.

**[Tableau16]**

| | Sol fatigué CO₂ mg.kg⁻¹ 24 ⁻¹ | Sol agricole CO₂ mg.kg⁻¹ 24 ⁻¹ |
|---|---|---|
| Contrôle | 20,36 a | 28,36 a |
| Hydrolysat 1 forme sèche | 29,98 (+45%) b | 30,07(+6%) b |
| Hydrolysat 1 forme liquide | 39,01(+91%) b | 33,40 (+18%) c |

Les lettres dans le tableau correspondent à l'analyse statistique réalisée par la méthode ANOVA. Deux analyses indépendantes ont été réalisées en fonction du sol.

L'hydrolysat 1, conforme à l'invention, qu'il soit sous forme liquide ou solide, permet d'augmenter significativement l'activité respiratoire des sols fatigués et agricoles.

Le tableau 17 présente l'analyse de la population totale bactérienne dans le sol. Les bactéries du sol ont été dénombrées après le mélange d'1 kg de sol avec 200 mg de K₂PO₄. Ce sol a été déposé dans des boites de *petri* sur un milieu gélosé 2%. Les bactéries ont été dénombrées après une période d'incubation de 14 jours à 28°C. Le résultat est exprimé en CFU, qui signifie « Colonie formant Unité », ce qui représente les bactéries vivantes. Toutes les analyses ont été faites en quatre répétitions pour chaque combinaison d'expériences.

**[Tableau17]**

| | Sol fatigué CFU x 10⁵ | Sol agricole CFU x 10⁵ |
|---|---|---|
| Contrôle | 12,59 a | 29,97 a |
| Hydrolysat 1 forme sèche | 28,46 (+126%) b | 38,05 (+26%) b |
| Hydrolysat 1 forme liquide | 27,05 (+114%) b | 40,71 (+35%) b |

Les lettres dans le tableau correspondent à l'analyse statistique réalisée par la méthode ANOVA. Deux analyses indépendantes ont été réalisées en fonction du sol.

L'hydrolysat 1, conforme à l'invention, qu'il soit sous forme liquide ou solide, permet d'augmenter significativement l'activité respiratoire des sols fatigués et agricoles.

Le tableau 18 présente l'analyse de la population totale de champignons dans le sol. Les champignons du sol ont été dénombrés en déposant le sol dans des boites *de petri* sur un milieu MARTINA décrit dans MARTIN J.P., 1950. Use of acid, rose bengal and streptomycin in the plate method for estimating soil fungi. Soil Sci. 69: 215-232. Les champignons ont été dénombrés après une période d'incubation de 5 jours à 24°C. Le résultat est exprimé en CFU, qui signifie « Colonie formant Unité », ce qui représente les champignons vivants. Toutes les analyses ont été faites en quatre répétitions pour chaque combinaison d'expériences.

**[Tableau18]**

| | Sol fatigué CFU x 10⁵ | Sol agricole CFU x 10⁵ |
|---|---|---|
| Contrôle | 3,15 a | 1,07 a |
| Hydrolysat 1 forme sèche | 2,14 (-32%) a | 3,31 (+208%) b |
| Hydrolysat 1 forme liquide | 3,28 (+4%) a | 3,19 (+198%) b |

Les lettres dans le tableau correspondent à l'analyse statistique réalisée par la méthode ANOVA. Deux analyses indépendantes ont été réalisées en fonction du sol.

L'hydrolysat 1, conforme à l'invention, qu'il soit sous forme liquide ou solide, permet d'augmenter significativement l'activité respiratoire des sols fatigués et agricoles.

L'utilisation de l'hydrolysat selon l'invention permet également une augmentation de l'activité globale respiratoire du sol et de l'activité globale enzymatique du sol. L'utilisation de l'hydrolysat selon l'invention permet une augmentation du nombre de bactéries et de champignons dans un sol, notamment un sol agricole et sol fatigué.

## Revendications

1. Utilisation d'un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprenant de l'acide glutamique en une teneur allant de 8 à 13% en poids par rapport au poids total de l'hydrolysat et de la glycine en une teneur allant de 6 à 9% en poids par rapport au poids total de l'hydrolysat, dans ou sur un support de culture pour augmenter la respiration microbienne dudit support de culture, ledit hydrolysat de kératine étant utilisé en mélange avec le support de culture en une quantité allant de 100 g à 1000 g en matière active d'hydrolysat par m³ de support de culture ou en application sur le support de culture en une quantité allant de 500 g à 5000 g en matière active d'hydrolysat par 10000 m² de support de culture, pour la détermination des quantités d'acides aminés libres et totaux, les acides aminés sont séparés par chromatographie.

2. Utilisation selon la revendication 1 dans laquelle ledit support de culture est le sol nu ou avec un couvert végétal.

3. Utilisation selon la revendication 1 ou 2 dans laquelle l'hydrolysat présente la composition suivante en acides aminés totaux : une teneur en acide aspartique allant de 5 à 8 % en poids, de préférence allant de 6 à 7 % en poids ; une teneur en thréonine allant de 3 à 6 % en poids, de préférence de 4 à 5 % en poids ; une teneur en sérine allant de 9 à 14 % en poids, de préférence allant de 10 à 12 % en poids; une teneur en acide glutamique allant de 9 à 11 % en poids ; une teneur en glycine allant de 6,5 à 8 % en poids; une teneur en alanine allant de 4 à 6 % en poids, de préférence de 4 à 5 % en poids ; une teneur en valine allant de 6 à 10 % en poids, de préférence allant de 6,5 à 8 % en poids; une teneur en méthionine allant de 0,1 à 0,6 % en poids ; une teneur en isoleucine allant de 4 à 6 % en poids, de préférence allant de 4 à 5 % en poids ; une teneur en leucine allant de 6 à 9 % en poids, de préférence allant de 7 à 8 % en poids ; une teneur en phénylalanine allant de 2 à 5 % en poids ; une teneur en lysine allant de 1 à 3 % en poids, une teneur en histidine allant de 0,4 à 1 % en poids ; une teneur en arginine allant de 5,5 à 6,5 % en poids ; une teneur en proline allant de 8,5 à 11 % en poids , une teneur en tryptophane inférieure à 0,1 %, de préférence 0 % en poids par rapport au poids total de l'hydrolysat.

4. Utilisation selon l'une quelconque des revendications précédentes dans laquelle l'hydrolysat présente une teneur en cystine allant de 1 à 2,5 % en poids, de préférence allant de 1 à 2 % en poids et une teneur en tyrosine allant de 0,1 à 1% en poids par rapport au poids total de l'hydrolysat.

5. Utilisation selon l'une quelconque des revendications précédentes dans laquelle l'hydrolysat comprend les acides aminés libres suivants : au moins 95% d'acide aspartique sous forme libre en poids par rapport au poids total d'acide aspartique dans l'hydrolysat ;au moins 95% de thréonine sous forme libre en poids par rapport au poids total de thréonine dans l'hydrolysat ;au moins 95% de sérine sous forme libre en poids par rapport au poids total de sérine dans l'hydrolysat ;au moins 93 % d'acide glutamique sous forme libre en poids par rapport au poids total d'acide glutamique dans l'hydrolysat ;au moins 93% de glycine sous forme libre en poids par rapport au poids total de glycine dans l'hydrolysat ;au moins 93% d'alanine sous forme libre en poids par rapport au poids total d'alanine dans l'hydrolysat ;au moins 95% de méthionine sous forme libre en poids par rapport au poids total de méthionine dans l'hydrolysat ;au moins 93% de phénylalanine sous forme libre en poids par rapport au poids total de phénylalanine dans l'hydrolysat ; au moins 95%, de proline sous forme libre en poids par rapport au poids total de proline dans l'hydrolysat.

6. Utilisation d'un hydrolysat de kératine selon l'une quelconque des revendications précédentes pour la régénération des supports de culture, de manière préférée des sols, en particulier pour stimuler l'activité enzymatique des sols.

7. Utilisation d'un hydrolysat de kératine selon l'une quelconque des revendications précédentes pour stimuler le développement des microorganismes capables d'utiliser au moins un substrat choisi dans le groupe formé par les substrats carbonés, substrats azotés et les substrats phosphorés.

8. Utilisation d'un hydrolysat de kératine selon l'une quelconque des revendications précédentes en application sur le support de culture en une quantité de 1500 g en matière active d'hydrolysat par 10000 m² de support de culture.

9. Utilisation d'un hydrolysat de kératine selon l'une quelconque des revendications 1 à 7 en mélange avec le support de culture en une quantité allant de 200 g à 700 g et de manière préférée de 550 g à 650 g en matière active d'hydrolysat par m³ de support de culture.

10. Utilisation d'un hydrolysat de kératine selon l'une quelconque des revendications précédentes dans laquelle l'hydrolysat de kératine est utilisé sous la forme d'une composition aqueuse comprenant de 45% à 55 % en poids de matière active d'hydrolysat de kératine par rapport au poids total de ladite composition.

11. Utilisation d'un hydrolysat de kératine selon l'une quelconque des revendications précédentes **caractérisé en ce qu'**il est préparé à partir d'une matière kératinique animale, de préférence de volaille, selon un procédé de préparation comprenant au moins une étape d'hydrolyse acide au moyen d'un acide fort choisi parmi les acides chlorhydrique, phosphorique et sulfurique, de préférence l'acide chlorhydrique.

12. Utilisation d'un hydrolysat de kératine selon l'une quelconque des revendications précédentes **caractérisé en ce qu'**il est préparé à partir d'une matière kératinique animale, de préférence de volaille, selon un procédé de préparation comprenant au moins les étapes suivantes, dans cet ordre :
- soumettre la matière kératinique à au moins une hydrolyse acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton,
- de préférence extraire la tyrosine et la cystine dudit hydrolysat de préférence au moyen d'une base,
- éventuellement le sécher.

13. Utilisation selon la revendication précédente dans laquelle l'hydrolyse acide est effectuée pendant une durée allant de 1 heure à 8 heures, de préférence allant de 6 à 7 heures à une température allant de 100 à 115°C, de préférence allant de 110 à 115°C.

14. Utilisation selon l'une des revendications 12 ou 13 dans laquelle l'hydrolyse acide est effectuée en deux étapes :
- une première hydrolyse réalisée à une température allant de 60 à 80°C pendant une période allant de 4 à 5 heures puis
- une deuxième hydrolyse réalisée à une température allant de 100 à 115°C pendant une période allant de 5 à 7 heures,
les deux hydrolyses pouvant être réalisées sans étape de pause intermédiaire ou en effectuant une étape de pause intermédiaire comprise entre 1 heure et 7 jours.

15. Utilisation selon l'une quelconque des revendications 12 à 14 dans laquelle la tyrosine et la cystine sont extraites dudit hydrolysat et la phase liquide obtenue après l'extraction de la cystine et de la tyrosine est dessalée.

## Patentansprüche

1. Verwendung eines Keratinhydrolysats, das mindestens 88 Massenprozent freie Aminosäuren, bezogen auf das Gesamtgewicht der Aminosäuren des Hydrolysats, enthält, wobei die übrigen Aminosäuren des Hydrolysats in Form von Peptiden mit einem Molekulargewicht von höchstens 800 Da vorliegen, und wobei das Hydrolysat zwischen 8 und 13 Massenprozent Glutaminsäure sowie zwischen 6 und 9 Massenprozent Glycin, jeweils bezogen auf das Gesamtgewicht des Hydrolysats, enthält, in oder auf einem Kultursubstrat zur Erhöhung der mikrobiellen Beatmung des Kultursubstrats, wobei das Keratinhydrolysat entweder dem Kultursubstrat in einer Menge von 100 bis 1000 g pro m³ Kultursubstrat zugemischt oder auf das Kultursubstrat in einer Menge von 500 bis 5000 g pro 10.000 m² aufgebracht wird, wobei der Gehalt an freien Aminosäuren und an Gesamtaminosäuren mittels chromatographischer Trennung der Aminosäuren bestimmt wird.

2. Verwendung nach Anspruch 1, wobei das Kultursubstrat Erdboden mit oder ohne Vegetationsdecke ist.

3. Verwendung nach Anspruch 1 oder 2, wobei das Hydrolysat die folgende Zusammensetzung bezogen auf den Gesamtgehalt an Aminosäuren aufweist: einen Asparaginsäuregehalt von 5 bis 8 Massenprozent, vorzugsweise von 6 bis 7 Massenprozent; einen Threoningehalt von 3 bis 6 Massenprozent, vorzugsweise von 4 bis 5 Massenprozent; einen Seringehalt von 9 bis 14 Massenprozent, vorzugsweise von 10 bis 12 Massenprozent; einen Glutaminsäuregehalt von 9 bis 11 Massenprozent; einen Glycingehalt von 6,5 bis 8 Massenprozent; einen Alaningehalt von 4 bis 6 Massenprozent, vorzugsweise von 4 bis 5 Massenprozent; einen Valingehalt von 6 bis 10 Massenprozent, vorzugsweise von 6,5 bis 8 Massenprozent; einen Methioningehalt von 0,1 bis 0,6 Massenprozent; einen Isoleucingehalt von 4 bis 6 Massenprozent,
vorzugsweise von 4 bis 5 Massenprozent; einen Leucingehalt von 6 bis 9 Massenprozent, vorzugsweise von 7 bis 8 Massenprozent; einen Phenylalaningehalt von 2 bis 5 Massenprozent; einen Lysingehalt von 1 bis 3 Massenprozent sowie einen Histidingehalt von 0,4 bis 1 Massenprozent;
einen Arginingehalt von 5,5 bis 6,5 Massenprozent; einen Prolingehalt von 8,5 bis 11 Massenprozent sowie einen Tryptophangehalt von weniger als 0,1 Massenprozent, vorzugsweise 0 Massenprozent, bezogen auf das Gesamtgewicht des Hydrolysats.

4. Verwendung nach einem der vorstehenden Ansprüche, wobei das Hydrolysat einen Cystingehalt von 1 bis 2,5 Massenprozent, vorzugsweise von 1 bis 2 Massenprozent, und einen Tyrosingehalt von 0,1 bis 1 Massenprozent, bezogen auf das Gesamtgewicht des Hydrolysats, aufweist.

5. Verwendung nach einem der vorstehenden Ansprüche, wobei das Hydrolysat die folgenden freien Aminosäuren enthält: mindestens 95 % Asparaginsäure in freier Form, bezogen auf das Gesamtgewicht der Asparaginsäure im Hydrolysat; mindestens 95 % Threonin in freier Form, bezogen auf das Gesamtgewicht des Threonins im Hydrolysat; mindestens 95 % Serin in freier Form, bezogen auf das Gesamtgewicht des Serins im Hydrolysat;mindestens 93 % Glutaminsäure in freier Form, bezogen auf das Gesamtgewicht der Glutaminsäure im Hydrolysat; mindestens 93 % Glycin in freier Form, bezogen auf das Gesamtgewicht des Glycins im Hydrolysat; mindestens 93 % Alanin in freier Form, bezogen auf das Gesamtgewicht des Alanins im Hydrolysat; mindestens 95 % Methionin in freier Form, bezogen auf das Gesamtgewicht des Methionins im Hydrolysat; mindestens 93 % Phenylalanin in freier Form, bezogen auf das Gesamtgewicht des Phenylalanins im Hydrolysat; mindestens 95 % Prolin in freier Form, bezogen auf das Gesamtgewicht des Prolins im Hydrolysat.

6. Verwendung eines Keratinhydrolysats nach einem der vorstehenden Ansprüche zur Regeneration von Kulturmedien, vorzugsweise von Böden, insbesondere zur Stimulierung der enzymatischen Aktivität von Böden.

7. Verwendung eines Keratinhydrolysats nach einem der vorstehenden Ansprüche zur Stimulierung der Entwicklung von Mikroorganismen, die mindestens ein aus der Gruppe der Kohlenstoffsubstrate, Stickstoffsubstrate und Phosphorsubstrate ausgewähltes Substrat verwerten können.

8. Verwendung eines Keratinhydrolysats nach einem der vorstehenden Ansprüche, das auf das Kultursubstrat in einem Verhältnis von 1500 g Hydrolysat-Wirkstoff pro 10.000 m² Kultursubstrat aufgebracht wird.

9. Verwendung eines Keratinhydrolysats nach einem der Ansprüche 1 bis 7, gemischt mit dem Kultursubstrat in einem Verhältnis von 200 g bis 700 g, vorzugsweise von 550 g bis 650 g, Hydrolysat-Wirkstoff pro m³ Kultursubstrat.

10. Verwendung eines Keratinhydrolysats nach einem der vorstehenden Ansprüche, wobei das Keratinhydrolysat in einer wässrigen Zusammensetzung verwendet wird, die 45 bis 55 Massenprozent Keratinhydrolysat-Wirkstoff, bezogen auf das Gesamtgewicht der genannten Zusammensetzung, enthält.

11. Verwendung eines Keratinhydrolysats nach einem der vorstehenden Ansprüche, **dadurch gekennzeichnet, dass** es aus tierischem keratinhaltigem Material hergestellt wird, vorzugsweise aus Geflügel, nach einem Verfahren, das mindestens einen Schritt der Säurehydrolyse mittels einer starken Säure nämlich Salzsäure, Phosphorsäure oder Schwefelsäure, vorzugsweise Salzsäure, umfasst.

12. Verwendung eines Keratinhydrolysats nach einem der vorstehenden Ansprüche, **dadurch gekennzeichnet, dass** es aus tierischem keratinhaltigem Material hergestellt wird, vorzugsweise aus Geflügel, nach einem Verfahren, das mindestens die folgenden Schritte in der angegebenen Reihenfolge umfasst:
- Das keratinhaltige Material wird mindestens einer Säurehydrolyse ausgesetzt, und zwar unter Bedingungen, bei denen ein Hydrolysat erzielt wird, welches mindestens 88 Massenprozent freie Aminosäuren, bezogen auf das Gesamtgewicht der Aminosäuren des Hydrolysats, enthält, wobei der Rest der Aminosäuren des Hydrolysats in Form von Peptiden mit einem Molekulargewicht von ≤ 800 Da vorliegt,
- das Tyrosin und das Cystin werden vorzugsweise aus dem genannten Hydrolysat extrahiert, vorzugsweise mittels einer Base;
- gegebenenfalls wird es getrocknet.

13. Verwendung nach dem vorstehenden Anspruch, wobei die Säurehydrolyse über einen Zeitraum von 1 Stunde bis 8 Stunden, vorzugsweise von 6 bis 7 Stunden, bei einer Temperatur von 100 bis 115° C, vorzugsweise von 110 bis 115° C, durchgeführt wird.

14. Verwendung nach einem der Ansprüche 12 oder 13, wobei die Säurehydrolyse in zwei Schritten durchgeführt wird:
- Eine erste Hydrolyse wird bei einer Temperatur von 60 bis 80° C über einen Zeitraum von 4 bis 5 Stunden durchgeführt, gefolgt von
- einer zweiten Hydrolyse bei 100 bis 115° C über einen Zeitraum von 5 bis 7 Stunden, wobei beide Hydrolyseschritte entweder ohne Zwischenpause oder mit einer Zwischenpause von 1 Stunde bis 7 Tagen durchgeführt werden können.

15. Verwendung nach einem der Ansprüche 12 bis 14, wobei Tyrosin und Cystin aus dem genannten Hydrolysat extrahiert werden und die nach der Extraktion von Cystin und Tyrosin erhaltene flüssige Phase entsalzt wird.

## Claims

1. Use of a keratin hydrolysate comprising at least 88% by weight of free amino acids relative to the total weight of the amino acids of the hydrolysate, the remainder of the amino acids of the hydrolysate being in the form of peptides having a molecular mass less than or equal to 800 Daltons, said hydrolysate comprising glutamic acid at a content ranging from 8 to 13% by weight relative to the total weight of the hydrolysate and glycine at a content ranging from 6 to 9% by weight relative to the total weight of the hydrolysate, in or on a growing medium to increase the microbial respiration of said growing medium, said keratin hydrolysate being used by mixing with the growing medium in an amount ranging from 100 g to 1000 g of hydrolysate active material per m³ of growing medium or by applying to the growing medium in an amount ranging from 500 g to 5000 g of hydrolysate active material per 10,000 m² of growing medium, for the determination of the amounts of free and total amino acids, the amino acids are separated by chromatography .

2. Use according to claim 1, wherein said growing medium is bare soil or soil with vegetation cover.

3. Use according to claim 1 or 2, wherein the hydrolysate has the following total amino acid composition: an aspartic acid content ranging from 5 to 8%, preferably ranging from 6 to 7% by weight, a threonine content ranging from 3 to 6% by weight, preferably from 4 to 5% by weight, a serine content ranging from 9 to 14% by weight, preferably ranging from 10 to 12% by weight, and a glutamic acid content ranging from 9 to 11% by weight; a glycine content ranging from 6.5 to 8% by weight, an alanine content ranging from 4 to 6% by weight, preferably from 4 to 5% by weight, a valine content ranging from 6 to 10% by weight, preferably ranging from 6.5 to 8% by weight, a methionine content ranging from 0.1 to 0.6% by weight, an isoleucine content ranging from 4 to 6% by weight, preferably ranging from 4 to 5% by weight, a leucine content ranging from 6 to 9% by weight, preferably ranging from 7 to 8% by weight, a phenylalanine content ranging from 2 to 5% by weight; a lysine content ranging from 1 to 3% by weight, a histidine content ranging from 0.4 to 1% by weight; an arginine content ranging from 5.5 to 6.5% by weight; a proline content ranging from 8.5 to 11% by weight, a tryptophan content less than 0.1%, preferably 0% by weight relative to the total weight of the hydrolysate.

4. Use according to any one of the preceding claims, wherein the hydrolysate has a cystine content ranging from 1 to 2.5% by weight, preferably ranging from 1 to 2% by weight, and a tyrosine content ranging from 0.1 to 1% by weight relative to the total weight of the hydrolysate.

5. Use according to any one of the preceding claims, wherein the hydrolysate comprises the following free amino acids: at least 95% of aspartic acid in free form by weight relative to the total weight of aspartic acid in the hydrolysate; at least 95% of threonine in free form by weight relative to the total weight of threonine in the hydrolysate; at least 95% of serine in free form by weight relative to the total weight of serine in the hydrolysate; at least 93% of glutamic acid in free form by weight relative to the total weight of glutamic acid in the hydrolysate; at least 93% of glycine in free form by weight relative to the total weight of glycine in the hydrolysate; at least 93% of alanine in free form by weight relative to the total weight of alanine in the hydrolysate; at least 95% of methionine in free form by weight relative to the total weight of methionine in the hydrolysate; at least 93% of phenylalanine in free form by weight relative to the total weight of phenylalanine in the hydrolysate; at least 95% of proline in free form by weight relative to the total weight of proline in the hydrolysate.

6. Use of a keratin hydrolysate according to any one of the preceding claims for the regeneration of growing media, preferably soils, in particular to stimulate the enzymatic activity of soils.

7. Use of a keratin hydrolysate according to any one of the preceding claims to stimulate the development of microorganisms capable of using at least one substrate selected from the group formed by carbon containing substrates, nitrogen containing substrates and phosphorus containing substrates.

8. Use of a keratin hydrolysate according to any one of the preceding claims by applying to the growing medium in an amount of 1500 g of hydrolysate active material per 10,000 m² of growing medium.

9. Use of a keratin hydrolysate according to any one of claims 1 to 7 by mixing with the growing medium in an amount ranging from 200 g to 700 g and preferably from 550 g to 650 g of hydrolysate active material per m³ of growing medium.

10. Use of a keratin hydrolysate according to any one of the preceding claims, wherein the keratin hydrolysate is used in the form of an aqueous composition comprising from 45% to 55% by weight of keratin hydrolysate active material relative to the total weight of said composition.

11. Use of a keratin hydrolysate according to any one of the preceding claims, **characterized in that** it is prepared from an animal keratin material, preferably poultry, according to a preparation method comprising at least one step of acid hydrolysis using a strong acid chosen from hydrochloric, phosphoric and sulfuric acids, preferably hydrochloric acid.

12. Use of a keratin hydrolysate according to any one of the preceding claims **characterized in that** it is prepared from an animal keratin material, preferably poultry, according to a preparation method comprising at least the following steps, in this order:
- subjecting the keratin material to at least one acid hydrolysis under conditions capable of obtaining a hydrolysate comprising at least 88% by weight of free amino acids relative to the total weight of the amino acids of the hydrolysate, the remainder of the amino acids of the hydrolysate being in the form of peptides having a molecular mass less than or equal to 800 Daltons,
- preferably extracting tyrosine and cystine from said hydrolysate preferably by means of a base;
- optionally drying it.

13. Use according to the preceding claim wherein the acid hydrolysis is performed for a duration ranging from 1 hour to 8 hours, preferably ranging from 6 to 7 hours at a temperature ranging from 100 to 115°C, preferably ranging from 110 to 115°C.

14. Use according to one of claims 12 or 13 wherein the acid hydrolysis is performed in two steps:
- a first hydrolysis performed at a temperature ranging from 60 to 80°C for a period ranging from 4 to 5 hours, then
- a second hydrolysis performed at a temperature ranging from 100 to 115°C for a period ranging from 5 to 7 hours,
the two hydrolysis operations can be performed without an intermediate break step or by performing an intermediate break step between 1 hour and 7 days.

15. Use according to any one of claims 12 to 14 wherein tyrosine and cystine are extracted from said hydrolysate and the liquid phase obtained after the extraction of cystine and tyrosine is desalinated.
